# EUROPÄISCHE PATENTSCHRIFT

(11) **EP 2 179 215 B1**
(45) Veröffentlichungstag und Bekanntmachung des Hinweises auf die Patenterteilung: **22.12.2010**
(21) Anmeldenummer: 08786089.6
(22) Anmeldetag: 11.07.2008
(51) Int. Cl.: F21S 8/10, F21V 9/08, B60Q 1/26, F21W 101/12, F21W 101/14

(54) **FAHRZEUGLEUCHTVORRICHTUNG MIT EINEM ZUSATZREFLEKTOR ZUM SEITLICHEN UMLENKEN EINES LICHTTEILS EINER LICHTQUELLE**
VEHICLE ILLUMINATING DEVICE HAVING AN ADDITIONAL REFLECTOR FOR THE LATERAL DEFLECTION OF A LIGHT PORTION OF A LIGHT SOURCE
DISPOSITIF D'ÉCLAIRAGE DE VÉHICULE COMPRENANT UN RÉFLECTEUR SUPPLÉMENTAIRE DESTINÉ À DÉVIER LATÉRALEMENT UNE PARTIE DE LA LUMIÈRE D'UNE SOURCE DE LUMIÈRE

(30) Priorität: 17.07.2007 DE 102007033711
(43) Veröffentlichungstag der Anmeldung: 28.04.2010
(73) Patentinhaber: Volkswagen Aktiengesellschaft, 38436 Wolfsburg (DE)
(72) Erfinder: JANSSEN, André, 38550 Isenbüttel (DE)
(86) Internationale Anmeldenummer: PCT/EP2008/059093
(87) Internationale Veröffentlichungsnummer: WO 2009/010465

(56) Entgegenhaltungen:
- EP-A- 0 715 988
- DE-U1- 9 001 659
- US-A1- 2002 181 236
- US-A1- 2003 227 781

## Beschreibung

Die Erfindung betrifft eine Fahrzeugleuchtvorrichtung, insbesondere eine Heckleuchte eines Kraftfahrzeugs, mit den im Oberbegriff des Anspruchs 1 genannten Merkmalen.

Es ist bekannt, dass die Beleuchtung eines Fahrzeugs sicherheitsrelevanten Aspekten unterliegt und insbesondere zuverlässig die Leuchtsignale des Fahrers, aber auch die das Fahrzeug markierende Lichtsignale anzeigen muss. Hierbei bestehen technische Anforderungen an die Mindest- und Maximalleuchtkraft der geläufigen Leuchtsignale wie Blinklicht, Schlusslicht, Bremslicht, Rückfahrlicht, Nebelschlusslicht und andere, damit diese bei Tageslicht gut sichtbar und bei Nacht nicht übermäßig hell sind, um andere Verkehrsteilnehmer nicht zu blenden. Insbesondere besteht eine Anforderung, die Lichtsignale auch aus der zum Fahrzeug seitlichen Blickrichtung gut erkennbar und sichtbar vorzusehen.

Hierzu war das klassische bewährte Mittel, beispielsweise für das Blinklicht vorne und hinten jeweils eine zusätzliche, seitlich an der Karosserie des Fahrzeugs angeordnete dublierende Leuchte vorzusehen. Oft ist eine solche zweite Blinklichtleuchte in einem Seitenspiegel vorgesehen. Das erfordert zusätzlichen Material- und Montageaufwand, durch welchen zusätzliche Kosten entstehen und dementsprechend auch der Instandhaltungsaufwand zusätzlich erhöht ist. In einigen Ländern wie in den USA bestehen verkehrsrelevante Vorschriften, die eine seitliche Sichtbarkeit der Schlussleuchten, Blinkleuchten beziehungsweise Bremsleuchten vorschreiben. Diesen Problemen versuchen viele Hersteller dadurch ohne eine zusätzliche seitliche Leuchte Herr zu werden, indem sie die Fahrzeugleuchten so gestalten, dass diese die betreffenden Lichtsignale zusätzlich auch zur Seite von dem Fahrzeug weg abstrahlen. Nachfolgend ist eine Auswahl derartiger Lösungen angeführt.

In der DE 21 40 165 B2 ist ein Reflektor für Kraftfahrzeugleuchten mit zumindest zwei getrennten gekrümmten Reflektorflächen innerhalb desselben gekrümmten Bereichs offenbart, die aus rippenartigen Teilflächenträgern gebildet sind, die abwechselnd nebeneinander angeordnet sind und zwei verschieden ausgerichtete konkave Reflektoren bilden. Jeder der Reflektoren hat dadurch eine unterbrochene Oberfläche und leitet daher nur einen Teil des Lichts in die vorgesehene Richtung, wobei die beiden Abstrahlrichtungen sich nur in einem relativ geringen Winkel unterscheiden können, der weit kleiner als 90° sein muss.

In der DE 90 01 659 U1 ist eine Heckleuchte eines Kraftfahrzeugs offenbart, in welcher der Reflektor für das Blinklicht sich über die gesamte Breite der heckseitigen Fläche des Lichtscheibenabschnitts für das Blinklicht erstreckt und weit in den seitlichen Bereich des Lichtscheibenabschnitts hineinreicht. Der Reflektor weist Bereiche auf, die mit Trippeln (dreieckigen Prismen) und Zylinderlinsen besetzt sind, die an der Innenseite des die Außenschale der Heckleuchte bildenden Reflektors nach innen zu den Lichtquellen hin zugewandt angeordnet sind. Ferner ist eine zusätzliche Zwischenlichtscheibe oder eine Optikscheibe offenbart, die ebenso mit nach innen zu der Lichtquelle gewandten Linsen besetzt ist. Weiterhin ist der Reflektor mit Rippen oder Rinnen ausgestattet, die als optische Lichtstreumittel dienen. Die nicht verwendeten Bereiche zwischen den einzelnen Funktionsbereichen des Reflektors haben aufgeraute Oberflächen, um die Funktionsbereiche voneinander zu trennen.

DE 100 36 324 A1 zeigt eine Mehrkammerleuchte, bei der zur Erhöhung der Leuchtdichte ein stab- oder streifenförmiger Lichtleiter so angeordnet ist, dass das Licht in die benachbarten Lichtscheibenabschnitte umgelenkt wird, wobei der Lichtleiter optische Mittel aufweist, die das Licht in die gewünschte Lichtausrichtung umlenken. Die Lichtscheibe ist glockenförmig ausgeführt und weist auf ihrer der Lichtquelle zugewandten Vorderseite optische Mittel, speziell Prismen, die das auf sie auftreffende Licht bündeln, und ferner weitere optische Mittel, die das Licht streuen, auf. Zum Abgrenzen einzelner funktioneller Leuchtbereiche voneinander werden zwischenliegende Teilbereiche lichtundurchlässig gemacht, so beispielsweise ebenso wie der Lichtleiter von der der Lichtscheibe abgewandten Seite metallbedampft. Die Lichtscheibe ist einstückig mit den optischen Mitteln ausgeführt und dient als Farbfilter oder kann Farbfilter enthalten.

Die DE 10 2004 047 548 A1 offenbart eine als dritte Bremsleuchte im Heckbereich eines Fahrzeugs dienende Heckleuchte, in der aus Gründen der leichteren Montierbarkeit die Lichtscheibe zweiteilig ausgeführt und mit Dichtungen gegen die Karosserieteile abgedichtet ist. Das ist eine zusätzliche Leuchte und bringt daher Zusatzkosten mit sich, wobei diese außerdem nicht zur Erhöhung der seitlichen Sichtbarkeit dient.

In der DE 103 32 977 A1 ist eine Heckleuchte offenbart, bei der in einer als Lichtquelle dienenden Glühbirne zwei Leuchtspiralen vorgesehen sind, deren Licht mittels optischer Mittel wie Lichtleiter und Linsen zwei verschiedenen Funktionsbereichen getrennt zugeführt werden, beispielsweise dem Bremslicht und der Schlussleuchte. Als optische Mittel sind Lichtleiter, Prismen und Linsen vorgesehen. Ein oder mehrere Lichtleiter sind für den einen Glühfaden vorgesehen und die Linse ist mit ihrem Brennpunkt auf den zweiten Glühfaden gerichtet. Diese Lösung erfordert eine spezielle Glühbirne mit den zwei voneinander beabstandeten Leuchtspiralen.

DE 103 61 488 A1 offenbart eine Leuchte für Kraftfahrzeuge, die die Wärmeprobleme einer Leuchte dadurch zu lösen vorschlägt, in dem Sockelbereich der Lichtquelle, einer Glühbirne, optische Prismenflächen anzuordnen, die das eintreffende Licht in die Lichtaustrittsrichtung der Leuchte umlenken. Dadurch wird zwar eine größere, die Wärmeverluste mindernde Lichtausbeute erreicht, aber spezielle Verbreiterung des Lichtaustrittswinkels nicht effektiv erreicht.

In DE 197 32 742 A1 ist eine vorzugsweise vordere Leuchteinrichtung eines Kraftfahrzeugs offenbart, bei der zum Zwecke der Erfüllung der Vorschriften zur seitlichen Sichtbarkeit der Leuchtsignale der Reflektor einen unterbrochenen Bereich aufweist, durch welchen ein Teil des Lichts der gleichen Lichtquelle seitlich austreten kann. Hierbei ist die Reflektorfläche unterbrochen und das Licht der Lichtquelle tritt direkt, ohne umgelenkt zu sein, nach außen seitlich durch die Abdeckscheibe hindurch, die auf ihrer Innenseite optische Mittel wie Linsen oder Prismen zum Streuen des Lichts aufweisen kann. Bei dieser Lösung ist ein zusätzlich als ein Einzelteil angefertigter und eingebauter Reflektor verwendet, durch welchen zusätzliche Kosten entstehen.

DE 198 20 656 A1 offenbart eine Mehrkammerleuchte für Fahrzeuge, die zum Zwecke der Verringerung der Lichtverluste und zum Abdecken der inneren Teile der Leuchte gegen Einblicke von außen optikfreie Bereiche und abdeckende Bereiche in der Zwischenlicht- und der Abdeckscheibe aufweist.

DE 198 60 669 A1 offenbart einen Scheinwerfer, bei dem zwecks besserer Einteilung der Nah- und Fernlichtbereiche Blenden vor der Lichtquelle angeordnet sind, und diese Blenden rückseitig als Reflektoren dienen, wobei das zurückreflektierte Licht auf einen zusätzlich oberhalb ausgebildeten Reflektor für den Nahbereich gerichtet ist.

DE 694 01 314 T2 schlägt vor, hauptsächlich aus gestalterischen Gründen Licht streuende Elemente aus einem transparenten Kunststoff, welches lichtreflektierende metallische Teilchen enthält, zum seitlichen Umranden einer Fahrzeugleuchte zu verwenden. Dadurch kann man zwar auch den Ausleuchtwinkel vergrößern, aber die Lichtdämpfung infolge der Lichtstreuung dürfte zu groß sein, so dass die Leuchtstärke einer Fahrzeugleuchte darunter leiden könnte.

EP 0 715 988 B1 und DE 695 12 614 T2 offenbaren eine Fahrzeugrückleuchte, bei der eine Zwischenlichtscheibe, der Reflektor und die äußere Abschlussschale optische Mittel wie Prismen und zylindrische konkave Linsen aufweist, die in Reihen und in Richtung zur Lichtquelle hin auf der zu der Lichtquelle zugewandten Seite angeordnet sind. Solche zusätzlichen optischen Mittel ermöglichen es nicht immer und nicht in jedem Anwendungsfall die erforderliche Verbreiterung des Lichtaustrittswinkels und dadurch die erforderliche seitliche Sichtbarkeit des Lichtsignals zu erreichen.

Weiterhin ist es notwendig, eine Fahrzeugleuchtvorrichtung insbesondere eines PKW möglichst kompakt auszuführen, damit sie der gewünschten äußeren Gestaltform der Karosserie des PKW angepasst sein kann, ohne dabei zuviel von dem Innenraum des Fahrzeugs zu beanspruchen, der auf Kosten eines verringerten Kofferraumvolumens verloren gehen würde.

Der Erfindung liegt die Aufgabe zugrunde, den Abstrahlungswinkel zumindest eines funktionellen Leuchtbereichs einer Fahrzeugleuchte ausgehend von zumindest einer Lichtquelle derart auszurichten, dass das Licht dieser Lichtquelle zusätzlich zu seiner Hauptausrichtung entlang des Fahrzeugs auch seitlich nach außen von dem Kraftfahrzeug in einem zumindest rechten Winkel und einer Leuchtstärke abgestrahlt wird, die den jeweiligen Vorschriften zur seitlichen Markierungspflicht genügen, das heißt das Fahrzeug aus seitlicher Richtung deutlich markieren und dabei eine größtmögliche Kompaktheit der Fahrzeugleuchte berücksichtigt ist.

Dadurch, dass in einer Fahrzeugleuchtvorrichtung zum integrierten Anbringen in jeweils einem Eckrandbereich eines Kraftfahrzeugs deren Gehäuse mit zumindest einer Kammer, zumindest einer in einem Halter positionierten Lichtquelle, zumindest einem Reflektor, zumindest einer Zwischenlichtscheibe mit darin zumindest in Teilbereichen ausgebildeten optischen Mitteln, wobei die Zwischenlichtscheibe zumindest einen in einer Signalfarbe eingefärbten Signalfunktionsbereich aufweist, den elektrischen Anschlusskontakten und einer von der Zwischenlichtscheibe beabstandet angeordneten Abdeckgehäusescheibe ausgestattet ist, der zumindest eine Reflektor in einer ersten Kammer erfindungsgemäß zumindest einen seitlichen Ausschnitt aufweist, der in einer hauptsächlich horizontalen, seitlich von dem Kraftfahrzeug wegweisenden Richtung vorgesehen ist, das Gehäuse der Fahrzeugvorrichtung einen in den seitlichen Bereich der Karosserie des Fahrzeugs erstreckten Seitenlichtbereich aufweist, in dem eine zusätzliche Seitenzwischenlichtscheibe angeordnet ist, wobei die Abdeckgehäusescheibe auch den Seitenlichtbereich mit der Seitenzwischenlichtscheibe von außen in einem Abstand abdeckt, wird erreicht, dass ein Teil des Lichts der betreffenden Lichtquelle durch den in dem zugehörigen Reflektor vorgesehenen seitlichen Ausschnitt bezüglich der Fahrtrichtung des Fahrzeugs in hauptsächlich seitlicher Richtung nach außen abgestrahlt ist.

In einer bevorzugten Ausführung der erfindungsgemäßen Fahrzeugleuchtvorrichtung ist in dem in den seitlichen Bereich der Karosserie des Fahrzeugs erstreckten Seitenlichtbereich, in dem eine zusätzliche Seitenzwischenlichtscheibe angeordnet ist, ein zusätzlicher seitlicher Lichtleiter parallel zu der Seitenzwischenlichtscheibe angeordnet. Dieser Lichtleiter nimmt das auf ihn eintreffende Licht auf und leitet es in den sonst schwer auszuleuchtenden Bereich der relativ schmal und länglich ausgebauten Nebenkammer des Seitenlichtbereichs. Der Lichtleiter ist aus einem transparenten oder halbtransparenten Material hergestellt, und in einer weiteren erfindungsgemäßen Ausbildung vorliegender Erfindung ist die der Seitenzwischenlichtscheibe abgewandte Seite des Lichtleiters mit einem das Licht reflektierenden Mittel versehen, damit das durch den Lichtleiter geleitete Licht möglichst ohne Verluste nach außen hin zu der zusätzlichen Seitenzwischenlichtscheibe geleitet wird. Neben anderen ebenso möglichen Ausführungen kann das lichtreflektierende Mittel an der der Seitenzwischenlichtscheibe abgewandten Seite des Lichtleiters eine das Licht reflektierende Schicht sein, die beispielsweise als eine Metallschicht aufgedampft ist.

In einer weiteren bevorzugten Ausführung der vorliegenden Erfindung weist die Fahrzeugleuchtvorrichtung zumindest eine zweite, der ersten Kammer benachbarte Kammer mit einer zweiten Lichtquelle und einem zweiten Reflektor auf, dessen konkav gewölbte Rückseite gleichzeitig einen konvex vorragenden Teilbereich einer Innenwandung der ersten Kammer bildet, wobei eine dem in dem Reflektor der ersten Kammer ausgebildeten Ausschnitt gegenüberliegende Teilfläche des Reflektors der ersten Kammer als ein Teilreflektor eingerichtet ist, der das auf ihn einfallende Licht in die Richtung zum seitlichen Ausschnitt des Reflektors der ersten Kammer umlenkt. Auf diese Weise lässt sich platzsparend in einer Fahrzeugleuchtvorrichtung in nur einer, zwei Kammern trennenden Wandung beidseitig jeweils ein Reflektor auch dann einrichten, wenn diese Wandung eine auf der einen Seite gewölbte Flächenbeschaffenheit aufweist.

In bevorzugter Weiterbildung der vorliegenden Erfindung weist die dem in dem Reflektor der ersten Kammer ausgebildeten Ausschnitt gegenüberliegende Teilfläche des Reflektors der ersten Kammer in ihr integrierte, einstückig ausgebildete optische Mittel zum gezielten Umlenken der einfallenden Lichtstrahlen in Richtung zum seitlichen Ausschnitt in dem Reflektor der ersten Kammer auf. Ohne diese zusätzlichen optischen Mittel würde der konvex vorragende Teilbereich der Rückseite des Reflektors der zweiten Kammer das auf ihn einfallende Licht streuen beziehungsweise nicht ausreichend bündeln können. Diese zusätzlichen, in der dem Ausschnitt gegenüberliegenden Teilfläche des Reflektors der ersten Kammer integrierten, einstückig ausgebildeten optischen Mittel zum Umlenken der einfallenden Lichtstrahlen in Richtung zum seitlichen Ausschnitt in dem Reflektor der ersten Kammer sind in einer bevorzugten weiteren Ausbildung der vorliegenden Erfindung als streifenförmige, in mehreren Reihen untereinander angeordnete optische Prismen ausgebildet, die durch deren gegliederte, geneigte optische Flächen in der Lage sind, das einfallende Licht in die gewünschte Richtung umzulenken.

In einem die Erfindung nicht einschränkenden Anwendungsbeispiel ist die erfindungsgemäße Fahrzeugleuchtvorrichtung, die eine erste Kammer mit der darin positionierten Lichtquelle und dem erfindungsgemäßen Seitenlichtbereich aufweist, als eine Schlusslichtleuchte in einer als eine Heckleuchte dienenden Fahrzeugleuchtvorrichtung verwendet.

In einem weiteren, die Erfindung nicht einschränkenden Anwendungsbeispiel ist die erfindungsgemäße Fahrzeugleuchtvorrichtung, die eine erste Kammer mit der darin positionierten Lichtquelle und dem erfindungsgemäßen Seitenlichtbereich aufweist, als eine Bremsleuchte in einer als eine Heckleuchte dienenden Fahrzeugleuchtvorrichtung verwendet.

In noch einem, die Erfindung nicht einschränkenden Anwendungsbeispiel ist die erfindungsgemäße Fahrzeugleuchtvorrichtung, die eine erste Kammer mit der darin positionierten Lichtquelle und dem erfindungsgemäßen Seitenlichtbereich aufweist, als eine Blinklichtleuchte in einer als eine Heckleuchte oder als ein Scheinwerfer dienenden Fahrzeugleuchtvorrichtung verwendet.

In einer weiteren bevorzugten Ausgestaltung vorliegender Erfindung ist zumindest eine einer ersten Signallichtfunktion zugeordnete Kammer mit einer darin vorgesehenen Lichtquelle von einer weiteren, einer zweiten Signallichtfunktion zugeordneten Kammer umlaufend umschlossen. Hierdurch ergeben sich Vorteile bei der Gestaltung der Abstrahlcharakteristiken beider benachbarten Signallichtfunktionen.

Die gleichen erfindungsgemäße Merkmale sind für verschiedene funktionelle Anwendungsbereiche einer Fahrzeugleuchtvorrichtung sowohl in hinteren als auch in vorderen Eckrandbereichen eines Kraftfahrzeugs anwendbar, für die eine zusätzliche seitliche Sichtbarkeit beziehungsweise Markierungsfunktion zu gewährleisten ist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine erfindungsgemäße Fahrzeugleuchtvorrichtung in einer schematischen Querschnittansicht;
- Figur 2: eine erfindungsgemäße Fahrzeugleuchtvorrichtung aus Figur 1 in einer vergrößerten schematischen Teilquerschnittansicht ohne Abdeckgehäusescheibe und
- Figur 3: eine perspektivische Außenansicht der erfindungsgemäßen Fahrzeugleuchtvorrichtung aus Figur 1 ohne Abdeckgehäusescheibe.

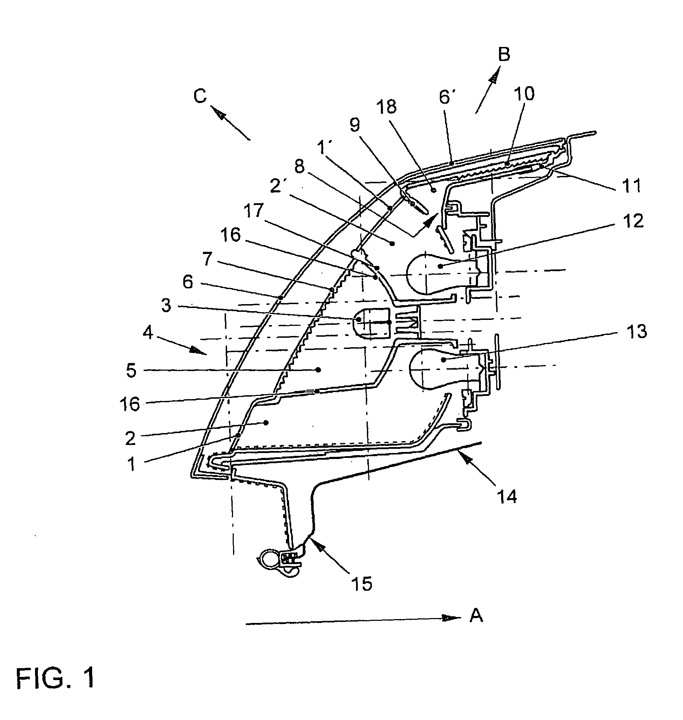

Figur 1 zeigt in einer schematischen Querschnittansicht eine bevorzugte Ausführung der erfindungsgemäßen Fahrzeugleuchtvorrichtung 4, die mit ihrem Gehäuse 14 in einem Eckrandbereich eines (nicht dargestellten) Kraftfahrzeugs zum in die Gestaltform der Karosserieoberfläche integrierten Einbau ausgebildet ist.

Die Fahrzeugleuchtvorrichtung 4 weist eine äußere Abdeckgehäusescheibe 6 auf, die um einen seitlichen verlängerten Seitenlichtbereich 6' verlängert erstreckt ist. Diese Abdeckgehäusescheibe 6, 6' ist vorzugsweise einstückig ausgeführt und schützt das Innere der Fahrzeugleuchtvorrichtung 4 vor Witterungseinflüssen, insbesondere gegen Eindringen von Regenwasser, Staub und Feuchtigkeit. Sie ist bevorzugt glasklar und farblos transparent ausgeführt, kann aber auch in ihr integriert eingerichtete optische Mittel wie Linsen, aufgeraute Bereiche und Prismen und ebenso eine Einfärbung je nach Anwendungsanforderungen aufweisen. Ferner dient sie bekanntlich auch gestalterischen Zwecken.

Hinter der Abdeckgehäusescheibe 6, 6' in einem Abstand ist eine einstückige oder mehrteilige Zwischenlichtscheibe 1, 1' und 7 angeordnet, wobei vor allem in dem erfindungsgemäß seitlichen verlängerten Seitenlichtbereich 6' auch eine zusätzliche Seitenzwischenlichtscheibe 10 vorgesehen ist, die hierbei zwecks Kompaktheit relativ eng an der Abdeckgehäusescheibe 6', aber immer noch beabstandet parallel verlaufend angeordnet ist. Die beabstandet hinter der Abdeckgehäusescheibe 6, 6' positionierte/n Zwischenlichtscheibe/n sind wie oben erwähnt im Stand der Technik bekannt und dienen als Farbfilter zum Einfärben des Lichts einer Lichtquelle 12 in die vorgesehene Signalfarbe und ebenso der Lichtstreuung und Bündelung sowie der gestalterischen Freiheit beziehungsweise der gewünschten Verdeckung der Lichtquellendetails vor einem Einblick. Im vorliegenden Beispiel trägt die Zwischenlichtscheibe 7 an ihrer der Lichtquelle zugewandten Seite optische Mittel zum Streuen des Lichts, die beispielsweise Prismen sind oder in einer weiteren Ausführung auch Linsen sein können.

Die Zwischenlichtscheibe 1, 1', 7, 10 deckt jeweils eine der Kammern 2, 2', 5 und die Nebenkammer 18 ab. In dem vorliegenden Beispiel bilden die Kammern 2 und 2' eine zusammenhängende Kammer, die um die Außenseite der Kammer 5 herum ganz oder teilweise umschließend angeordnet ist, jedoch kann diese Kammer in einer anderen Ausführung auch in zwei getrennte Kammer aufgeteilt sein. Die Kammer 2, 2' ist hierbei nur beispielhaft mit zwei Lichtquellen 12 und 13 ausgestattet, die entweder eine Funktion aus Sicherheitsgründen dublieren oder aber zwei artnahe Signallichtfunktionen ausführen, wie zum Beispiel Schlusslicht und Bremslicht, die im europäischen und nordamerikanischen Anwendungsbereich üblicherweise mit einem rotfarbigen Signal ausgestattet sind. Die Innenseite der Kammer 2, 2' ist als ein Reflektor 9 ausgeführt und hierzu vorzugsweise mit einer lichtreflektierenden Schicht versehen.

Bei der vorliegenden bevorzugten Ausführung der vorliegenden Erfindung geht es darum, das Licht der Lichtquelle 12, die gewöhnlich als eine in einem Sockel mit elektrischen Anschlüssen gehaltene Glühbirne ausgeführt ist, zusätzlich zu seinem hauptsächlichen Abstrahlen durch die Zwischenlichtscheibe 1' auch seitlich von dem Fahrzeug, möglichst in einer Querrichtung zu seiner Bewegung, die mit dem Pfeil A angezeigt ist, abzustrahlen. Hierzu ist in dem Reflektor 9 der Kammer 2' ein seitlich in Richtung nach außen von dem Fahrzeug gerichteter Ausschnitt 8 ausgespart. Die Größe dieses Ausschnitts 8 ist derart gewählt, dass hinreichend viel Licht für die seitliche Markierungsanzeige durch ihn hindurchtreten kann und zugleich die verbleibenden Bereiche des Reflektors 9 genügend Licht der Lichtquelle 12 zum Abstrahlen in der mit der Pfeilrichtung C angezeigten Hauptabstrahlrichtung bündeln können.

Hinter dem Ausschnitt 8 in dem Reflektor 9 der Kammer 2' ist eine Nebenkammer 18 ausgebildet, in welcher ein Lichtleiter 11 und eine von ihm beabstandet positionierte zusätzliche Seitenzwischenlichtscheibe 10 angeordnet ist. Das Licht der Lichtquelle 12 tritt durch die Öffnung des Ausschnitts 8 hindurch, gelangt zum größten Teil direkt auf die Seitenzwischenlichtscheibe 10 und teilweise in den Lichtleiter 11, in dem das Licht umgelenkt und zu dem verlängerten, seitlich abzweigenden Teil der Seitenzwischenlichtscheibe 10 geleitet ist und dadurch auch den nicht direkt beleuchteten Teil der Seitenzwischenlichtscheibe 10 ausleuchtet. Im Ergebnis ergibt sich eine durch den Richtungspfeil B angezeigte Hauptrichtung der seitlichen erfindungsgemäßen Zusatzbeleuchtung, die sogar unter einem Winkel leicht nach vorn des Kraftfahrzeugs weist, also besser noch als nur um 90° seitlich des Fahrzeugs strahlt.

In dem vorliegenden Ausführungsbeispiel der vorliegenden Erfindung bilden die Kammern 2 und 2' eine zusammenhängende Kammer 2, 2', wodurch auch ein Teil des Lichts der zweiten Lichtquelle 13 umgelenkt durch die reflektierenden Flächen der Kammer 2, 2' in die erfindungsgemäße seitliche Nebenkammer 18 geleitet werden kann. Dadurch kann in einem Anwendungsbeispiel, wenn die Lichtquelle 13 beispielsweise für das Bremslichtsignal und die Lichtquelle 12 für das Schlusslichtsignal zuständig ist, der erfindungsgemäße Seitenlichtbereich 6' sowohl zum seitlichen Markieren durch Schlusslicht wie auch zum seitlichen Markieren durch das Bremslicht verwendet werden, da das Bremslicht beispielsweise eine sehr viel intensivere Lichtstärke als das Schlusslicht aufweist und dadurch eine deutliche Sichtunterscheidung beider möglich ist.

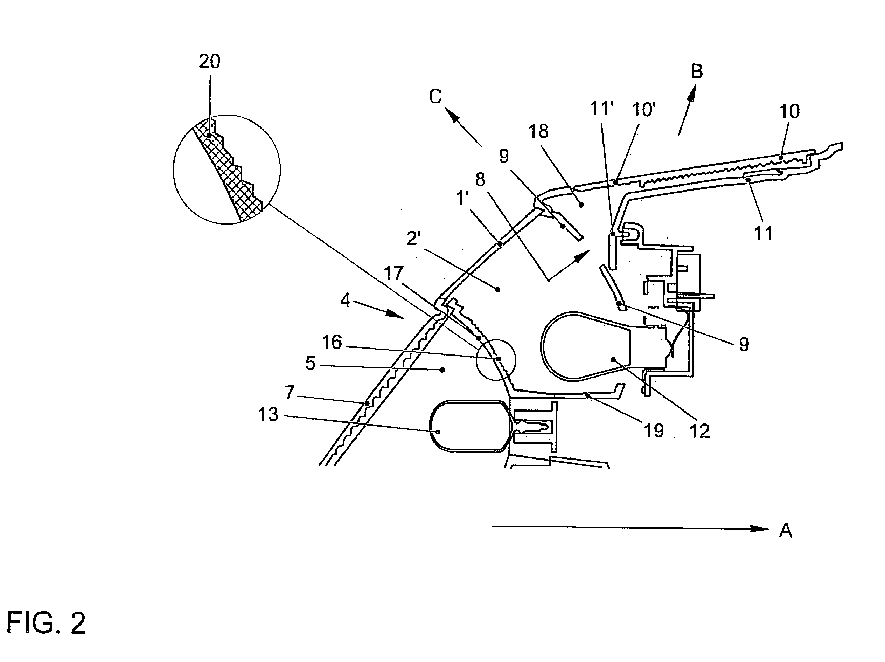

Figur 2 zeigt die bevorzugte erfindungsgemäße Ausführung der Fahrzeugleuchtvorrichtung aus Figur 1 in einer zur besseren Darstellung einzelner erfindungsrelevanter Details vergrößerten schematischen Teilquerschnittansicht ohne Abdeckgehäusescheibe 6, 6' und eines Teils des Gehäuses 14. Auf eine wiederholende Beschreibung der bereits unter Figur 1 beschriebenen Merkmale soll im Folgenden zugunsten noch nicht beschriebener Aspekte verzichtet werden.

Die der Fahrzeugaußenseite abgewandte Seitenwandung 17 der zweiten Kammer 2' ist durch die Rückseite der konkav ausgebildeten Teilfläche des Reflektors 16 der benachbarten Kammer 5 gebildet und ist daher aus der Sicht der ersten Kammer 2' in optisch ungünstiger Weise konvex, das heißt gewölbt ausgebildet. Die Seitenwandung 17 muss aber vorzugsweise auch als eine Reflektorfläche in der Kammer 2' dienen und die Lichtstrahlen der Lichtquelle 12 auf eine möglichst günstige Art und Weise sowohl in der Hauptabstrahlrichtung C als auch in der seitlichen Abstrahlrichtung B umlenken können. Eigens zu diesem Zweck ist die Oberfläche der Seitenwandung 17 vorzugsweise einstückig mit optischen Mitteln wie zum Beispiel Prismen 20 ausgestattet. Solche Prismen können vorteilhaft als in die Länge gezogene Rillen ausgebildet sein, deren Flächen jeweils in einem für die gewünschte Abstrahlrichtung optimalen Neigungswinkel in Bezug auf die Lichtquelle 12 und die jeweilige zugeordnete Abstrahlrichtung B oder C angeordnet sind, wobei jede Prismenrille 20 einen anderen relativen Neigungswinkel aufweisen kann. In dem Beispiel der vorliegenden Ausführung der Erfindung ist ein nahe an der Lichtquelle 12 liegender Teilbereich 17 der Seitenwandung 17 mit den Prismenrillen 20 derart ausgestattet, dass deren optisches Umlenkvermögen hauptsächlich in der erfindungsgemäß beabsichtigten seitlichen Abstrahlrichtung B erfolgt. Hierdurch gelangt zusätzlich zu dem direkt aus der Lichtquelle 12 durch die Öffnung des Ausschnitts 8 seitlich nach außen des Fahrzeugs abgestrahlten Lichtanteil diese über den Teilbereich 17 des Reflektors der ersten Kammer 2' umgelenkte zusätzliche Lichtstrahlung auf die Seitenzwischenlichtscheibe 10, was insgesamt dafür sorgt, dass die erforderlichen und oft vorgeschriebenen Lichtstärkewerte auch in der bezüglich der Fahrtrichtung seitlichen Richtung erreicht werden.

Der untere Teilbereich des Reflektors 19 trägt ebenso wie die, die Lichtquelle 12 umlaufend umschließenden Teilbereiche 9 des Reflektors dazu bei, das Licht der Lichtquelle 12 zu bündeln und hauptsächlich in der Hauptabstrahlrichtung C abzustrahlen. Alle Oberflächen der Reflektoren und der Prismen 20 sind in einer bevorzugten Ausführung, zum Beispiel durch Aufdampfen einer Metallschicht, lichtreflektierend gemacht.

Die Zwischenlichtscheibe 1' dient in dem vorliegenden Beispiel als Farbfilter und Lichtstreumittel. Sie kann glasklar ausgeführt oder optische Mittel wie Prismen und Linsen aufweisen, die dazu dienen, das einfallende Licht zu streuen und das Innere der Kammer 2' vor einem Einblick zu verdecken. Je nach Anwendungsbeispiel kann die Lichtquelle 12 als ein Schlusslicht vorgesehen sein und dann beispielsweise durch eine roteingefärbte Zwischenlichtscheibe 1' ein rotes Signallicht abgeben.

Das durch die Öffnung des seitlichen Ausschnitts 8 des Reflektors 9 austretende Licht trifft auf eine hierzu in seinem Weg positionierte Seitenzwischenlichtscheibe 10, die ebenso als ein Farbfilter und Lichtstreumittel dient. Hierbei gibt es einen Vorderteil 10' der Seitenzwischenlichtscheibe 10, der direkt von den seitlich in der Richtung B umgelenkten Lichtstrahlen getroffen wird, während der restliche, weiter in die linke beziehungsweise rechte Seite des Fahrzeugs erstreckte Teilbereich der Seitenzwischenlichtscheibe 10 nicht direkt von diesem Strahlengang erfasst sein kann. Um auch diesen, nicht direkt in dem Strahlengang B liegenden seitlichen Bereich besser auszuleuchten, ist ein Lichtleiter 11 so geformt und angeordnet, dass ein Teil der seitlich umgelenkten Lichtstrahlen in einen Vorderteil 11' des Lichtleiters eintritt und in ihm umgeleitet bis in den entferntesten Punkt des Lichtleiters gelangt.

Der Lichtleiter 11 ist ein an sich bekanntes Element und in der bekannten Art aus einem transparenten Material, meist einem Kunststoff ausgeführt. Seine der Seitenzwischenlichtscheibe abgewandte Seite kann in einer bevorzugten Ausführung lichtreflektierend ausgeführt sein, damit das Licht effektiver in Richtung der Seitenzwischenlichtscheibe 10 und somit nach außen geleitet ist. Es kann aber auch in einer Ausführung transparent gelassen sein, und stattdessen die Gehäuse-Innenwand (nicht dargestellt) als eine lichtreflektierende Fläche ausgeführt sein.

Der nicht direkt von dem Licht angestrahlte Teil der Seitenzwischenlichtscheibe 10 ist ferner in einer bevorzugten Ausführung an der nach innen gewandten Seite mit optischen Mitteln zum Streuen des von dem Lichtleiter 11 eintreffenden Lichts wie Prismen oder Linsen ausgestattet.

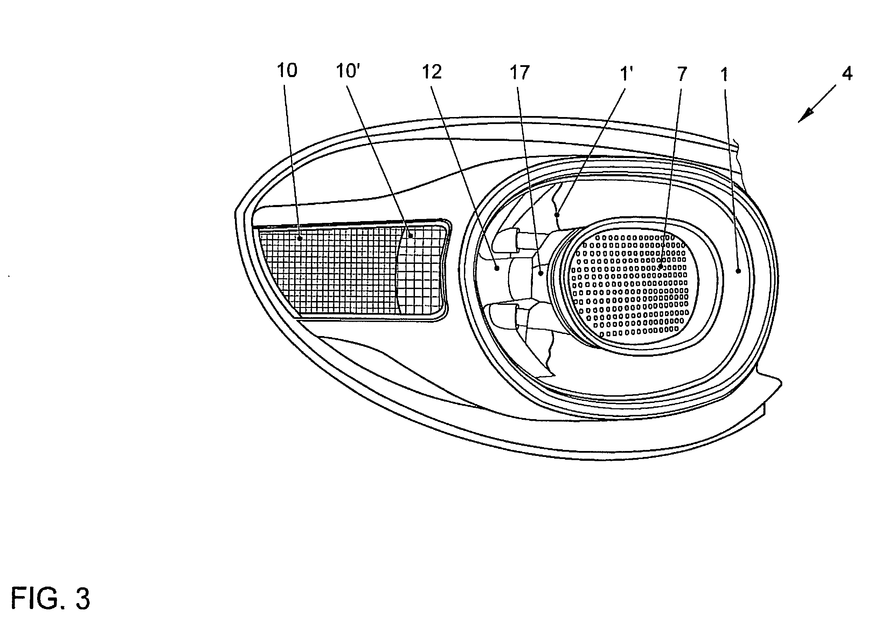

Figur 3 zeigt eine perspektivische Außenansicht der bevorzugten Ausführung der erfindungsgemäßen Fahrzeugleuchtvorrichtung 4 aus Figur 1, die als eine Heckleuchte ausgeführt ist, ohne Abdeckgehäusescheibe 6, 6'.

Gut sichtbar ist, dass die Zwischenlichtscheibe 1, 1' eine Zwischenlichtscheibe bildet, die einen mittleren Funktionssignalbereich umschließt, der durch die Zwischenlichtscheibe 7 abgedeckt ist. Die Zwischenlichtscheibe 7 ist hierbei beispielsweise farblos ausgeführt und trägt optische Mittel wie Linsen und/oder Prismen zum Streuen des auf sie aus der Kammer 5 von der Lichtquelle 3 eintreffenden Lichts. Dieses beispielsweise weiße Licht kann in einem Ausführungsbeispiel der vorliegenden Erfindung als ein Blinklichtsignal oder ein Rückfahrlicht verwendet sein.

Hinter der Zwischenlichtscheibe 1' ist der Reflektor 17 zum Umlenken eines Lichtanteils der Lichtquelle 12 zu der seitlichen Seitenzwischenlichtscheibe 10, 10' vorgesehen. Der Bereich der Seitenzwischenlichtscheibe 10, 10' liegt in dem seitlichen Bereich, in diesem Fall auf der linken Seite eines Kraftfahrzeugs bezüglich der Fahrtrichtung.

Die dargestellte Heckleuchte 4 wird mit der nicht dargestellten Abdeckgehäusescheibe 6, 6' abgedeckt, die die Fahrzeugleuchtvorrichtung 4 gegen die Witterungseinflusse schützt.

Die vorangehenden Ausführungen der vorliegenden Erfindung sind lediglich beispielhaft und nicht als die vorliegende Erfindung begrenzend auszulegen. Die vorliegende Erfindungslehre kann leicht auf andere Typen von lichtaussendenden Vorrichtungen und Anwendungen übertragen werden. Die Beschreibung des Ausführungsbeispiels ist vorgesehen, anschaulich zu sein und nicht, um den Schutzbereich der Patentansprüche einzuschränken. Viele Alternativen, Modifikationen und Varianten sind für einen durchschnittlichen Fachmann offensichtlich, ohne dass er hierfür den Schutzumfang der vorliegenden Erfindung verlassen müsste, der in den angehängten Ansprüchen definiert ist.

### BEZUGSZEICHENLISTE

- 1: Zwischenlichtscheibe
- 1': Zwischenlichtscheibe
- 2: Kammer
- 2': erste Kammer
- 3: Lichtquelle
- 4: Fahrzeugleuchtvorrichtung
- 5: zweite Kammer
- 6: Abdeckgehäusescheibe
- 6': Abdeckgehäusescheibe, Seitenlichtbereich
- 7: Zwischenlichtscheibe
- 8: Ausschnitt
- 9: Reflektor
- 10: Seitenzwischenlichtscheibe
- 10': Seitenzwischenlichtscheibe, Vorderteil der Seitenzwischenlichtscheibe
- 11: Lichtleiter
- 11': Lichtleiter, Vorderteil des Lichtleiters
- 12: Lichtquelle
- 13: Lichtquelle
- 14: Gehäuse
- 15: Befestigungsvorsprung
- 16: Reflektor
- 17: Teilreflektor, Teilfläche des Reflektors, Seitenwandung
- 18: Nebenkammer
- 19: Reflektor, Teilbereich des Reflektors
- 20: optische Mittel, Prismen

## Patentansprüche

1. Fahrzeugleuchtvorrichtung (4) zum integrierten Anbringen in jeweils einem Eckrandbereich eines Kraftfahrzeugs, deren Gehäuse (14) mit zumindest einer Kammer (2, 2', 5), zumindest einer in einem Halter positionierten Lichtquelle (3, 12, 13), zumindest einem Reflektor (9, 16), zumindest einer Zwischenlichtscheibe (1, 1', 7) mit darin zumindest in Teilbereichen ausgebildeten optischen Mitteln (20), wobei die Zwischenlichtscheibe (1, 1', 7, 10) zumindest einen in einer Signalfarbe eingefärbten Signalfunktionsbereich aufweist, den elektrischen Anschlusskontakten und einer von der Zwischenlichtscheibe (1, 1', 7) beabstandet angeordneten Abdeckgehäusescheibe (6, 6') ausgestattet ist,
**dadurch gekennzeichnet, dass**
der zumindest eine Reflektor (9) in einer ersten Kammer (2') zumindest einen seitlichen Ausschnitt (8) aufweist, der in einer hauptsächlich horizontalen, seitlich von dem Kraftfahrzeug wegweisende Richtung vorgesehen ist,
das Gehäuse der Fahrzeugleuchtvorrichtung einen in den seitlichen Bereich der Karosserie des Fahrzeugs erstreckten Seitenlichtbereich (6') aufweist, in dem eine zusätzliche Seitenzwischenlichtscheibe (10, 10') angeordnet ist,
wobei die Abdeckgehäusescheibe (6, 6') auch den Seitenlichtbereich (6') mit der Seitenzwischenlichtscheibe (10, 10') von außen in einem Abstand abdeckt.

2. Fahrzeugleuchtvorrichtung nach Anspruch 1,
**dadurch gekennzeichnet, dass**
in dem in den seitlichen Bereich der Karosserie des Fahrzeugs erstreckten Seitenlichtbereich (6'), in dem eine zusätzliche Seitenzwischenlichtscheibe (10, 10') angeordnet ist, ein zusätzlicher seitlicher Lichtleiter (11, 11') parallel zu der Seitenzwischenlichtscheibe angeordnet ist.

3. Fahrzeugleuchtvorrichtung nach Anspruch 2,
**dadurch gekennzeichnet, dass**
der Lichtleiter (11, 11') aus einem transparenten oder halbtransparenten Material hergestellt ist.

4. Fahrzeugleuchtvorrichtung nach Anspruch 3,
**dadurch gekennzeichnet, dass**
die der Seitenzwischenlichtscheibe (10, 10') abgewandte Seite des Lichtleiters (11, 11') mit einem lichtreflektierenden Mittel versehen ist.

5. Fahrzeugleuchtvorrichtung nach Anspruch 4,
**dadurch gekennzeichnet, dass**
das lichtreflektierende Mittel an der der Seitenzwischenlichtscheibe (10, 10') abgewandten Seite des Lichtleiters (11, 11') eine lichtreflektierende Schicht ist.

6. Fahrzeugleuchtvorrichtung nach einem der vorhergehenden Ansprüche,
**dadurch gekennzeichnet, dass**
die Fahrzeugleuchtvorrichtung (4) zumindest eine zweite, der ersten Kammer (2') benachbarte Kammer (5) mit einer zweiten Lichtquelle (3) und einem zweiten Reflektor (16) aufweist, dessen konkav gewölbte Rückseite gleichzeitig einen konvex vorragenden Teilbereich (17) einer Innenwandung der ersten Kammer (2') bildet, wobei eine dem Ausschnitt (8) gegenüberliegende Teilfläche (17) des Reflektors der ersten Kammer (2') als ein Teilreflektor (17) eingerichtet ist, der das auf ihn einfallende von der Lichtquelle Licht in die Richtung zum seitlichen Ausschnitt (8) des Reflektors (9) der ersten Kammer (2') umlenkt.

7. Fahrzeugleuchtvorrichtung nach Anspruch 6,
**dadurch gekennzeichnet, dass**
die dem Ausschnitt (8) gegenüberliegende Teilfläche des Reflektors (17) der ersten Kammer (2') in ihr integrierte, einstückig ausgebildete optische Mittel (20) zum Umlenken der einfallenden Lichtstrahlen in Richtung zum seitlichen Ausschnitt (8) in dem Reflektor (9) der ersten Kammer (2') aufweist.

8. Fahrzeugleuchtvorrichtung nach Anspruch 7,
**dadurch gekennzeichnet, dass**
die in der dem Ausschnitt (8) gegenüber liegenden Teilfläche des Reflektors (17) der ersten Kammer integrierten, einstückig ausgebildeten optischen Mittel (20) zum Umlenken der einfallenden Lichtstrahlen in Richtung zum seitlichen Ausschnitt (8) in dem Reflektor (9) der ersten Kammer (2') streifenförmig in mehreren Reihen untereinander angeordnete optische Prismen (20) sind, deren Reflexionsflächen jeweils einen anderen angepassten relativen Neigungswinkel aufweisen.

9. Fahrzeugleuchtvorrichtung nach einem der vorhergehenden Ansprüche,
**dadurch gekennzeichnet, dass**
die erste Kammer (2') mit der darin positionierten Lichtquelle (12) und dem Seitenlichtbereich (6', 10, 10') einer Schlusslichtleuchte in einer als eine Heckleuchte dienender Fahrzeugleuchtvorrichtung zugeordnet sind.

10. Fahrzeugleuchtvorrichtung nach einem der Ansprüche 1 bis 8,
**dadurch gekennzeichnet, dass**
die erste Kammer (2') mit der darin positionierten Lichtquelle (12) und dem Seitenlichtbereich (6', 10, 10') einer Bremsleuchte in einer als eine Heckleuchte dienender Fahrzeugleuchtvorrichtung zugeordnet sind.

11. Fahrzeugleuchtvorrichtung nach einem der Ansprüche 1 bis 8,
**dadurch gekennzeichnet, dass**
die erste Kammer (2') mit der darin positionierten Lichtquelle (12) und dem Seitenlichtbereich (6', 10, 10') einer Blinklichtleuchte in einer als eine Heckleuchte oder als ein Scheinwerfer dienenden Fahrzeugleuchtvorrichtung zugeordnet sind.

12. Fahrzeugleuchtvorrichtung nach einem der vorhergehenden Ansprüche,
**dadurch gekennzeichnet, dass**
zumindest eine einer ersten Signallichtfunktion zugeordnete Kammer (5) mit einer Lichtquelle (3) von einer weiteren, einer zweiten Signallichtfunktion zugeordneten Kammer (2, 2') umlaufend umschlossen ist.

## Claims

1. Vehicle lighting device (4) for integrated installation in respectively one corner edge region of a motor vehicle, the housing (14) of which is provided with at least one chamber (2, 2', 5), at least one light source (3, 12, 13) positioned in a holder, at least one reflector (9, 16), at least one intermediate light lens (1, 1', 7) having.optical means (20) formed therein at least in subregions, the intermediate light lens (1, 1', 7, 10) having at least one signal function region coloured in a signal colour, and provided with the connection contacts and a covering housing lens (6, 6') arranged at a spacing from the intermediate light lens (1, 1', 7), **characterized in that** the at least one reflector (9) in a first chamber (2') has at least one lateral cutout (8) which is provided in a direction which is chiefly horizontal and points away laterally from the motor vehicle, and the housing of the vehicle lighting device has a lateral lighting region (6') which extends into the lateral region of the body of the vehicle and in which an additional lateral intermediate light lens (10, 10') is arranged, the covering housing lens (6, 6') also covering the lateral lighting region (6') with the lateral intermediate light lens (10, 10') from the outside with a spacing.

2. Vehicle lighting device according to Claim 1, **characterized in that** an additional lateral light guide (11, 11') is arranged parallel to the lateral intermediate light lens in the lateral lighting region (6') which extends into the lateral region of the body of the vehicle and in which an additional lateral intermediate light lens (10, 10') is arranged..

3. Vehicle lighting device according to Claim 2, **characterized in that** the light guide (11, 11') is produced from a transparent or semitransparent material.

4. Vehicle lighting device according to Claim 3, **characterized in that** the side of the light guide (11, 11') averted from the lateral intermediate light lens (10, 10') is provided with a light-reflecting means.

5. Vehicle lighting device according to Claim 4, **characterized in that** the light-reflecting means on the side of the light guide (11, 11') averted from the lateral intermediate light lens (10, 10') is a light-reflecting layer.

6. Vehicle lighting device according to one of the preceding claims, **characterized in that** the vehicle lighting device (4) has at least a second chamber (5), adjacent to the first chamber (2'), having a second light source (3) and a second reflector (16) whose concavely cambered rear side simultaneously forms a convexly projecting subregion (17) of an inner wall of the first chamber (2'), a subarea (17), situated opposite the cutout (8), of the reflector of the first chamber (2') being set up as a partial reflector (17) which deflects the light incident on it from the light source into the direction towards the lateral cutout (8) in the reflector (9) of the first chamber (2').

7. Vehicle lighting device according to Claim 6, **characterized in that** the subarea, situated opposite the cutout (8), of the reflector (17) of the first chamber (2') has optical means (20) of unipartite design which are integrated in it and serve to deflect the incident light beams in a direction towards the lateral cutout (8) in the reflector (9) of the first chamber (2').

8. Vehicle lighting device according to Claim 7, **characterized in that** the optical means (20) of unipartite design which are integrated in the subarea, situated opposite the cutout (8), of the reflector (17) of the first chamber and serve to deflect the incident light beams in a direction towards the lateral cutout (8) in the reflector (9) of the first chamber (2') are optical prisms (20) which are arranged one among another in the form of strips in a plurality of rows and whose reflection surfaces respectively have another adapted relative inclination angle.

9. Vehicle lighting device according to one of the preceding claims, **characterized in that** the first chamber (2') with the light source (12) positioned therein and the lateral lighting region (6', 10, 10') are assigned to a taillight lamp in a vehicle lighting device serving as a rear lamp.

10. Vehicle lighting device according to one of Claims 1 to 8, **characterized in that** the first chamber (2') with the light source (12) positioned therein and the lateral lighting region (6', 10, 10') are assigned to a brake lamp in a vehicle lighting device serving as a rear lamp.

11. Vehicle lighting device according to one of Claims 1 to 8, **characterized in that** the first chamber (2') with the light source (12) positioned therein and the lateral lighting region (6', 10, 10') are assigned to a flashing direction indicator in a vehicle lighting device serving as a rear lamp or as a headlamp.

12. Vehicle lighting device according to one of the preceding claims, at least one chamber (5) assigned to a first signal light function and having a light source (3) is circumferentially enclosed by a further chamber (2, 2') assigned to a second signal light function.

## Revendications

1. Équipement de feux pour véhicule (4) destiné au montage intégré respectivement dans une zone de bord arrière d'un véhicule automobile, dont le boîtier (14) est équipé d'au moins une chambre (2, 2', 5), d'au moins une source de lumière (3, 12, 13) positionnée dans un support, au moins un réflecteur (9, 16), d'au moins un cabochon de feu intermédiaire (1, 1', 7) dans lequel sont formés des moyens optiques (20) au moins dans des zones partielles, le cabochon de feu intermédiaire (1, 1', 7, 10) présentant au moins une zone fonctionnelle de signalisation teinte dans une couleur de signalisation, des contacts de raccordement électrique et d'un cabochon de boîtier de protection (6, 6'),
**caractérisé en ce que**
l'au moins un réflecteur (9) présente dans une première chambre (2') au moins une découpe latérale (8) qui est prévue dans une direction principalement horizontale dans la perspective latérale du véhicule,
le boîtier de l'équipement de feux pour véhicule présente une zone de feu latéral (6') qui s'étend dans la zone latérale de la carrosserie du véhicule et dans laquelle est disposé un cabochon de feu intermédiaire latéral (10, 10') supplémentaire,
le cabochon de boîtier de protection (6, 6') recouvrant également à une certaine distance la zone de feu latéral (6') avec le cabochon de feu intermédiaire latéral (10, 10').

2. Équipement de feux pour véhicule selon la revendication 1,
**caractérisé en ce qu'**
un guide de lumière (11, 11') latéral supplémentaire est disposé parallèlement au cabochon de feu intermédiaire latéral dans la zone de feu latéral (6') qui s'étend dans la zone latérale de la carrosserie du véhicule, dans laquelle est disposé un cabochon de feu intermédiaire latéral (10, 10') supplémentaire.

3. Équipement de feux pour véhicule selon la revendication 2,
**caractérisé en ce que**
le guide de lumière (11, 11') est fabriqué dans un matériau transparent ou semi-transparent.

4. Équipement de feux pour véhicule selon la revendication 3,
**caractérisé en ce que**
le côté du guide de lumière (11, 11') qui est à l'opposé du cabochon de feu intermédiaire latéral (10, 10') est muni d'un moyen de réflexion de la lumière.

5. Équipement de feux pour véhicule selon la revendication 4,
**caractérisé en ce que**
le moyen de réflexion de la lumière sur le côté du guide de lumière (11, 11') qui est à l'opposé du cabochon de feu intermédiaire latéral (10, 10') est une couche réfléchissant la lumière.

6. Équipement de feux pour véhicule selon l'une des revendications précédentes,
**caractérisé en ce que**
l'équipement de feux pour véhicule (4) présente au moins une deuxième chambre (5), voisine de la première chambre (2'), comprenant une deuxième source de lumière (3) et un deuxième réflecteur (16) dont le côté arrière à bombage concave forme en même temps une zone partielle (17) en saillie convexe d'une paroi intérieure de la première chambre (2'), une surface partielle (17) du réflecteur de la première chambre (2'), à l'opposé de la découpe (8), étant configurée comme un réflecteur partiel (17) déviant la lumière qui vient le heurter depuis la source de lumière en direction de la découpe latérale (8) du réflecteur (9) de la première chambre (2').

7. Équipement de feux pour véhicule selon la revendication 6,
**caractérisé en ce que**
la surface partielle (17) du réflecteur de la première chambre (2') qui est à l'opposé de la découpe (8) présente des moyens optiques (20) intégrés monoblocs pour dévier les rayons lumineux incidents en direction de la découpe latérale (8) dans le réflecteur (9) de la première chambre (2').

8. Équipement de feux pour véhicule selon la revendication 7,
**caractérisé en ce que**
les moyens optiques (20) monoblocs intégrés dans la surface partielle (17) du réflecteur de la première chambre qui est à l'opposé de la découpe (8) pour dévier les rayons lumineux incidents en direction de la découpe latérale (8) du réflecteur (9) de la première chambre (2') sont des prismes optiques (20) en forme de bandes disposés en plusieurs rangées les uns au-dessous des autres et dont les surfaces réfléchissantes présentent respectivement un angle d'inclinaison relatif adapté différemment.

9. Équipement de feux pour véhicule selon l'une des revendications précédentes,
**caractérisé en ce qu'**
une lampe de feu arrière est associée à la première chambre (2') dans laquelle est positionnée la source de lumière (12) et à la zone de feu latéral (6', 10, 10') dans un équipement de feux pour véhicule servant de feu arrière.

10. Équipement de feux pour véhicule selon l'une des revendications 1 à 8,
**caractérisé en ce qu'**
une lampe de feu stop est associée à la première chambre (2') dans laquelle est positionnée la source de lumière (12) et à la zone de feu latéral (6', 10, 10') dans un équipement de feux pour véhicule servant de feu arrière.

11. Équipement de feux pour véhicule selon l'une des revendications 1 à 8,
**caractérisé en ce qu'**
une lampe de feu clignotant est associée à la première chambre (2') dans laquelle est positionnée la source de lumière (12) et à la zone de feu latéral (6', 10, 10') dans un équipement de feux pour véhicule servant de feu arrière ou de projecteur.

12. Équipement de feux pour véhicule selon l'une des revendications précédentes,
**caractérisé en ce qu'**
au moins une première chambre (5) munie d'une source de lumière (3) associée à une première fonction de feu de signalisation est entourée sur sa périphérie d'une autre chambre (2, 2') associée à une deuxième fonction de feu de signalisation.
